# EUROPEAN PATENT APPLICATION

(11) **EP 2 674 271 A1**
(43) Date of publication of application: **18.12.2013**
(21) Application number: 12744284.6
(22) Date of filing: 11.01.2012
(51) Int. Cl.: B28B 1/00

(54) **PRODUCTION METHOD FOR POWDER COMPACT, AND POWDER COMPACT**

(30) Priority: 10.02.2011 JP 2011026720
(71) Applicant: NGK Insulators, Ltd., Nagoya-shi, Aichi 467-8530 (JP)
(72) Inventor: HIRAIWA Toshiki, Nagoya-shi Aichi 467-8530 (JP); NAKAGAWA Hidemi, Nagoya-shi Aichi 467-8530 (JP); KIMURA Takuji, Nagoya-shi Aichi 467-8530 (JP)
(74) Representative: Naylor, Matthew John
(86) International application number: PCT/JP2012/050366
(87) International publication number: WO 2012/108222

(57) **Abstract**

The powder molding product of the present invention is a product produced using a slurry containing a powdery molding raw material, a dispersion medium for dispersing the molding raw material and having a molecular weight of 150 or more, a dispersant for uniformly dispersing the molding raw material in the dispersion medium, a binder precursor for producing an organic binder through a chemical reaction, and a reaction promoter for promoting the chemical reaction. The production method of the present invention comprises a slurry preparation step, a molding step of molding the prepared slurry into a primary powder molded product having a specific shape, and a drying-solidification step of solidifying the slurry by promoting the aforementioned chemical reaction in the primary powder molded product, and removing, through evaporation, the dispersion medium from the primary powder molded product.

## Description

### Field of the Invention

The present invention relates to a method for producing a powder molded product from a slurry containing a powdery molding raw material, and to a powder molded product produced through molding of the slurry.

### Background Art

There have been known various methods for producing such a molded product. Among these methods, widely employed is a technique in which a primary powder molded product is formed through a widely known method such as an injection molding or a sheet molding from a slurry containing a ceramic powder, an organic binder, and a dispersion medium, and the primary powder molded product is dry-solidified to thereby produce a ceramic green product (see, for example, Japanese Patent Application Laid-Open *(kokai)* No. H08-238613). As used herein, the term "green product" refers to a powder molded product which has not been subjected to sintering. Thus, when such a ceramic green product is subsequently sintered, a ceramic molded product is produced.

Such a conventionally well-known method for producing a powder molded product poses a problem in that when the powder molded product is formed through dry-solidification, a relatively large shrinkage occurs in the molded product. It should be noted that hereinafter such shrinkage may be referred to as "drying shrinkage". Such drying shrinkage is mainly caused by a reduction in distance between organic binder molecules associated with volatilization of a dispersion medium. When relatively large shrinkage occurs, naturally, a large "variation" occurs in the degree of shrinkage (hereinafter may be referred to as "percent drying shrinkage") of the molded product. When the percent drying shrinkage of a powder molded product (green product) is high, or the "variation" of the percent drying shrinkage is large, a ceramic molded product produced through sintering of the green product exhibits poor dimensional accuracy.

In order to solve such a problem, the present applicant previously proposed a method for producing a powder molded product through so-called "gel cast molding" (see, for example, Japanese Patent Application Laid-Open *(kokai)* No. H 11-48222, H 11-302302, 2001-335371, or 2010-241129, or International Publication WO 2009/104703). The production method disclosed in International Publication WO 2009/104703 includes the following steps: (1) preparing a ceramic slurry containing ceramic powder, an isocyanate, a polyol, a urethane reaction catalyst, a dispersion medium, and a dispersant; (2) molding the slurry into a product through any known method; and (3) dry-solidifying the resultant molded product.

In such a production method, when the molded product is dry-solidified, a urethane resin serving as an organic binder is produced through chemical reaction (urethane reaction) between unreacted isocyanate and polyol, resulting in gelation (solidification) of the slurry. As this gelation proceeds, cross-linking occurs between urethane groups (-O-CO-NH-) of adjacent urethane resin molecules. This cross-linking forms a strong network between urethane resin molecules. Therefore, even when volatilization of the dispersion medium proceeds, the distance between urethane resin molecules is less likely to be reduced, and thus the molded product exhibits low percent drying shrinkage.

### SUMMARY OF THE INVENTION

In view of the foregoing, an object of the present invention is to further improve the dimensional accuracy of a powder molded product produced through so-called "gel cast molding."

The powder molded product of the present invention is produced through molding of a slurry containing a powdery molding raw material (e.g., ceramic powder, metal powder, transition metal compound powder serving as a ceramic raw material, or a powder mixture thereof), a dispersion medium having a molecular weight of 150 or more, a dispersant for uniformly dispersing the molding raw material in the dispersion medium, a binder precursor for producing an organic binder (synthetic resin binder) through a chemical reaction, and a reaction promoter for promoting the chemical reaction. The dispersion medium is nonreactive (i.e., not directly responsible for the chemical reaction of the binder precursor), and may also serve as a solvent for the dispersant, the binder precursor, or the reaction promoter.

The aforementioned chemical reaction may be, for example, polymerization reaction or cross-linking reaction. Therefore, the reaction promoter employed may be a catalyst or a polymerization initiator. When the chemical reaction involves urethane reaction, the binder precursor is urethane precursors (e.g., a polyol and an isocyanate) which produce a urethane resin as the organic binder through urethane reaction, and the reaction promoter is a urethane reaction catalyst. As used herein, the term "isocyanate)" refers to a compound having an isocyanate group (-N=C=O); the term "polyol (polyhydric alcohol)" refers to a compound having a plurality of alcoholic hydroxyl groups (-OH) (including a compound having an additional functional group such as an amino group); and the term "urethane reaction" refers to polyaddition reaction between an alcoholic hydroxyl group and an isocyanate group. Also, water can be added as the reaction promoter along with the catalyst etc.

The method for producing a powder molded product of the present invention comprises:
a slurry preparation step of preparing a slurry containing the aforementioned molding raw material, dispersion medium, dispersant , binder precursor, and reaction promoter;
a molding step of molding the prepared slurry into a primary powder molded product having a specific shape; and
a drying-solidification step of solidifying the slurry by promoting the aforementioned chemical reaction in the primary powder molded product, and removing, through evaporation, the dispersion medium from the primary powder molded product (as used herein, the term "drying-solidification" includes gelation and curing).

The slurry which is subjected to the molding step may contain the organic binder which has already been produced from the binder precursor through the chemical reaction; i.e., the organic binder may be partially produced from the binder precursor before the drying-solidification step. The drying-solidification step may be divided into two steps; i.e., a solidification step of mainly solidifying the slurry by promoting the chemical reaction, and a drying step of mainly removing the dispersion medium through evaporation. In this case, there may be provided, between the solidification step and the drying step, a mold-releasing step of releasing the solidified primary powder molded product from a mold (e.g., a die). The dispersion medium remaining in the primary powder molded product released through the mold-releasing step, which has been solidified through the solidification step, is removed through evaporation in the subsequent drying step.

The drying-solidification step may be a step of heating the primary powder molded product. The heating step may be partially carried out during the molding step. That is, the primary powder molded product may be heated in a mold or molding machine employed in the molding step.

According to the present invention, through the drying-solidification step, in the primary powder molded product molded from the slurry, the slurry gelates (solidifies) through production of the organic binder from the binder precursor by the action of the reaction promoter, and the dispersion medium is removed through evaporation from the molded product. In the drying-solidification step, a urethane resin serving as the organic binder may be produced through urethane reaction between a polyol and an isocyanate.

The present inventors have conducted extensive studies, and as a result have found that when a nonreactive dispersion medium having a relatively high molecular weight (specifically, a molecular weight of 150 or more) is employed, the resultant molded product exhibits further reduced percent drying shrinkage, and the variation of the percent drying shrinkage is further reduced. Conceivably, the reason for this is attributed to the fact that even when the aforementioned reaction promoter is employed in an appropriate amount (i.e., not an excessively large amount), since the (nonreactive) dispersion medium has a high molecular weight, the aforementioned chemical reaction (polyaddition reaction and/or cross-linking reaction) proceeds at a high rate, and thus the aforementioned intermolecular network is formed more rapidly.

In addition, good solidification rate is attained, and percent drying shrinkage and the variation of the percent drying shrinkage are preferably reduced by adding water as the reaction promoter along with the catalyst etc. even when added amount of the catalyst etc. is low. The cause seems that reaction rate is enhanced by adding water and then the aforementioned intermolecular network is formed more rapidly.

According to the present invention, the percent drying shrinkage of the aforementioned powder molded product and the variation of the percent drying shrinkage can be further reduced. Therefore, the present invention can further improve the dimensional accuracy of the powder molded product, as well as that of a final molded product produced through sintering of the powder molded product.

### BRIEF DESCRIPTION OF THE DRAWINGS

[FIG. 1] FIG. 1 schematically shows an embodiment of the production method of the present invention.
[FIG. 2A] FIG. 2A is a schematic cross-sectional view of the components of the slurry shown in FIG. 1.
[FIG. 2B] FIG. 2B schematically shows a chemical reaction for producing a urethane resin serving as an organic binder from binder precursors, which are components of the slurry shown in FIG. 2A.
[FIG. 3] FIG.3 schematically shows a modification of the embodiment of the production method shown in FIG. 1.
[FIG. 4] FIG. 4 schematically shows another modification of the embodiment of the production method shown in FIG. 1.

### DETAILED DESCRIPTION OF PREFERRED EMBODIMENTS

Preferred embodiments of the present invention will next be described with reference to examples and comparative examples. The following description of the embodiments is nothing more than the specific description of mere example embodiments of the present invention to the possible extent in order to fulfill description requirements (descriptive requirement and enabling requirement) of specifications required by law.

Thus, as will be described later, naturally, the present invention is not limited to the specific configurations of embodiments and examples to be described below. Modifications that can be made to the embodiments and examples are collectively described herein principally at the end, since insertion thereof into the description of the embodiments would disturb understanding of consistent description of the embodiments.

### <Summary of production method>

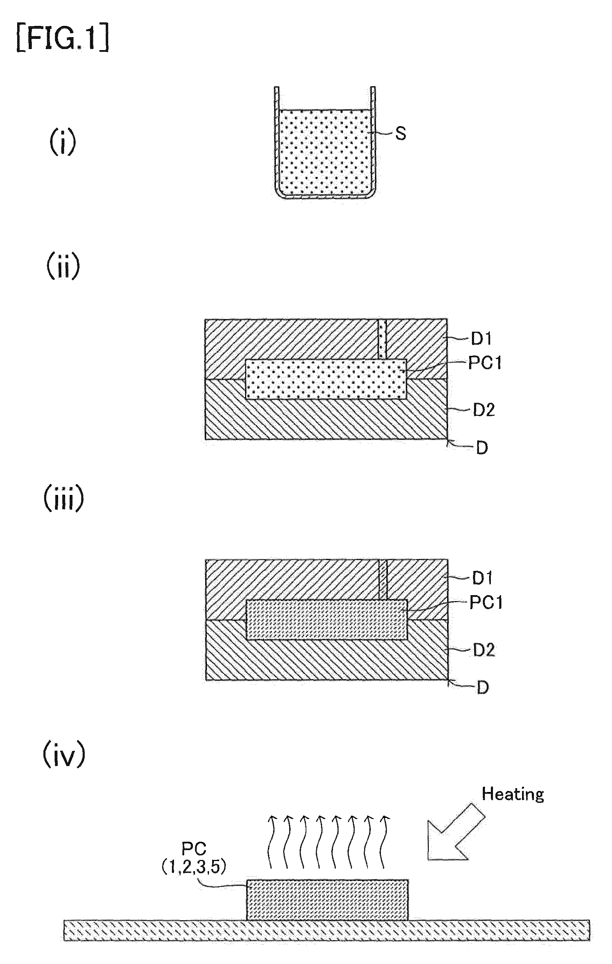

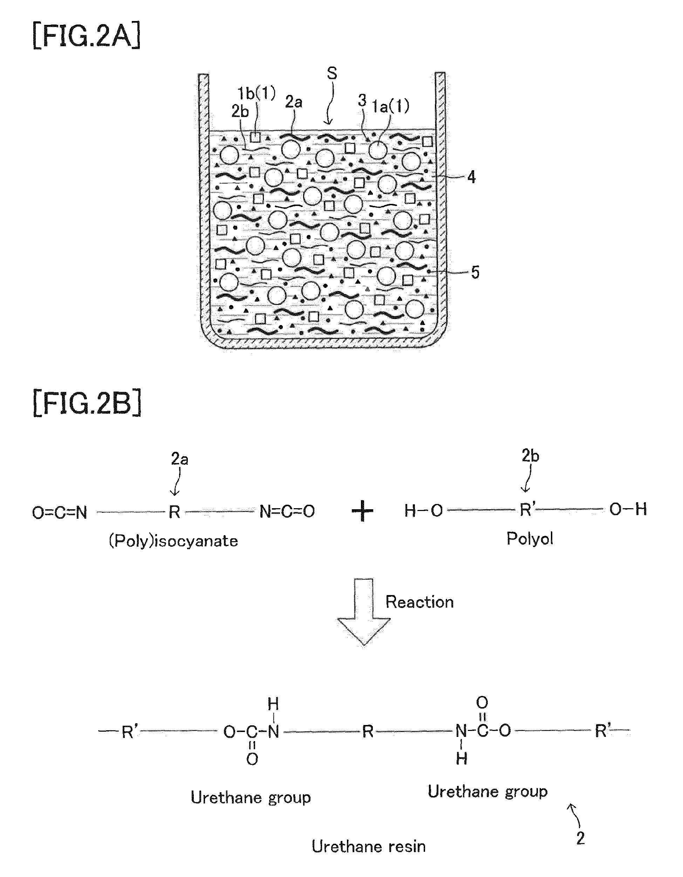

FIG. 1 schematically shows an embodiment of the production method of the present invention. FIG. 2A is a schematic cross-sectional view showing the components of the slurry S shown in FIG. 1. Referring to FiGs. 1 and 2A, in this embodiment, a powder molded product PC is produced through the below-described procedure.

### (Step 1: slurry preparation step)

A slurry S is prepared from a powdery ceramic raw material 1 (which may contain two or more ceramic raw materials 1 a, 1 b, etc. as shown in FIG. 2A); an isocyanate 2a and a polyol 2b serving as binder precursors; a catalyst 3; and a dispersion medium 4. The ceramic raw material 1 is dispersed in the dispersion medium 4. The isocyanate 2a, the polyol 2b, and the catalyst 3 are dissolved in the dispersion medium 4. In this case, a dispersant 5 is added for the purpose of reliably and uniformly dispersing the ceramic raw material 1 (1 a, 1 b) in the dispersion medium 4.

### (Step 2: molding step)

The slurry S prepared through step 1 is molded, through a well-known molding method, into a primary powder molded product PC1 having a specific shape (see (ii) of FIG. 1).

### (Step 3: drying-solidification step)

The primary powder molded product PC1 produced through the aforementioned molding method is allowed to stand at ambient temperature (see (iii) of FIG. 1), thereafter, is released from a mold and is heated in a dryer for a specific period of time (see (iv) of FIG. 1). Through this heating, chemical reaction between the isocyanate 2a and the polyol 2b (urethane reaction: see FIG. 2B) proceeds, whereby a urethane resin 2 serving as an organic binder is produced, and the slurry S forming the primary powder molded product PC1 solidifies (gelates). With this heating, the dispersion medium 4 is removed through evaporation. Thus, the primary powder molded product PC1 is dried and solidified under heating, to thereby produce a powder molded product PC containing the ceramic raw material 1 (1 a, 1 b), the urethane resin 2, the catalyst 3, and the dispersant 5. The organic components (e.g., the urethane resin 2, the catalyst 3, and the dispersant 5) contained in the powder molded product PC are removed through, for example, decomposition or scattering during sintering performed subsequent to the drying-solidification step.

Next will be described the respective steps in more detail.

### (Details of step 1)

The ceramic raw material 1 (1 a, 1 b) corresponding to the "molding, raw material" of the present invention may be an oxide ceramic material or a non-oxide ceramic material. For example, transition metal compound powder (e.g., ZrO₂, NiO, Y₂O₃, or Co₃O₄) which forms a ceramic material having an intended composition through sintering, or ceramic powder (e.g., Al₂O₃) having an intended composition may be employed. No particular limitation is imposed on the particle size of the ceramic raw material 1 (1a, 1 b), so long as the slurry S can be prepared (i.e., the ceramic raw material can be reliably dispersed in the dispersion medium 4).

No particular limitation is imposed on the isocyanate 2a, so long as it is a substance having an isocyanate group as a functional group (a polyisocyanate having a plurality of isocyanate groups as exemplified in the drawings may be particularly preferably be employed). Specifically, for example, tolylene diisocyanate (TDI), diphenylmethane diisocyanate (MDI), or a modified product thereof may be employed. Alternatively, an isocyanate having, in the molecule thereof, a reactive functional group other than an isocyanate group may be employed.

No particular limitation is imposed on the polyol 2b, so long as it is a substance having, as a functional group, a plurality of alcoholic hydroxyl groups. For example, ethylene glycol (EG), polyethylene glycol (PEG), propylene glycol (PG), polypropylene glycol (PPG), polytetramethylene ether glycol (PTMG), polyhexamethylene glycol (PHMG), or polyvinyl butyral (PVB) may be employed.

No particular limitation is imposed on the catalyst 3, so long as it is a substance which promotes urethane reaction. For example, triethylenediamine, hexanediamine, and 6-dimethylamino-1-hexanol may be employed.

No particular limitation is imposed on the dispersion medium 4, so long as it is a substance which dissolves the isocyanate 2a, the polyol 2b, the catalyst 3, and the dispersant 5, and which has a molecular weight of 150 or more (more preferably 160 or more). For example, esters (such as dimethyl glutarate, triacetin, ethylene glycol monobutyl ether acetate, diethylene glycol monobutyl ether acetate, and propylene glycol monomethyl ether acetate) may be employed. Particularly preferred is a substance having two or more ester bonds, such as a polybasic acid ester (e.g., dimethyl glutarate) or an acid ester of a polyhydric alcohol (e.g., triacetin).

The dispersant 5 may be, for example, a polycarboxylic acid copolymer, a polycarboxylate, a sorbitan fatty acid ester, a polyglycerin fatty acid ester, a phosphate copolymer, a sulfonate copolymer, or a polyurethane-polyester copolymer having tertiary amine. Particularly preferred is, for example, a polycarboxylic acid copolymer or a polycarboxylate. Addition of the dispersant 5 can reduce the viscosity of the slurry S and impart high fluidity thereto before molding of the slurry S.

### (Details of step 2)

(ii) of FIG. 1 represents a step of injecting the slurry S into a cavity provided between an upper die block D1 and a lower die block D2 of a die D. The primary powder molded product PC1 produced through this step contains at least the ceramic material 1 (1 a, 1 b), the isocyanate 2a, the polyol 2b, the catalyst 3, the dispersion medium 4, and the dispersant 5. The molded product may contain the urethane resin 2, which is produced through reaction between a portion of the isocyanate 2a and a portion of the polyol 2b. That is, urethane reaction may partially proceed during step 1 and/or step 2.

### (Details of step 3)

As gelation proceeds, cross-linking for linking urethane groups (-O-CO-NH-) of adjacent molecules of the urethane resin 2 to each other occurs between the adjacent molecules. This cross-linking forms a strong network between molecules of the urethane resin 2. Therefore, even when the dispersion medium 4 remaining in the primary powder molded product PC1 volatilizes under heating, reduction of the distance between molecules of the urethane resin 2 is suppressed to a minimum possible extent. Thus, when the powder molded product PC is produced from the primary powder molded product PC1 through step 3, percent drying shrinkage and the variation thereof can be reduced to a minimum possible extent.

As described above, the dispersion medium 4 employed in this embodiment has a relatively high molecular weight (specifically, a molecular weight of 150 or more) and is nonreactive. Therefore, percent drying shrinkage and the variation thereof are further reduced. Conceivably, the reason for this is attributed to the fact that even when the catalyst 3 is employed in an appropriate amount (i.e., not an excessively large amount), since the dispersion medium 4 has a high molecular weight, urethane reaction proceeds at a high rate, and thus the aforementioned intermolecular network is formed through cross-linking more rapidly.

As shown in FIG. 1, step 3 (drying-solidification step) may be divided into two steps; i.e., a gelation step of mainly allowing gelation (solidification) of the slurry to proceed by promoting the corresponding chemical reaction (see (iii) of FIG. 1), and a drying step of mainly removing the dispersion medium through evaporation (see (iv) of FIG. 1). In this case, the gelation step is carried out before removal of the primary powder molded product PC1 from the die D. In addition, there is carried out, between the gelation step and the drying step, a mold-releasing step of releasing the primary powder molded product PC1 from the die D, the molded product PC being stable in shape attributed to gelation even after having been released from the die D. The dispersion medium remaining in the primary powder molded product PC1 released through the mold-releasing step is removed through evaporation in the subsequent drying step.

### <Specific examples>

Next will be described the effects of the dispersion medium 4 having a relatively high molecular weight (specifically, a molecular weight of 150 or more) with reference to specific examples.

Zirconia (ZrO₂) powder (100 parts by weight), a polycarboxylic acid copolymer serving as a dispersant (3 parts by weight), and a dispersion medium (see the below-described Table 1) (20 parts by weight) were mixed together by means of a ball mill for 14 hours. Thereafter, the resultant mixture was further mixed with urethane precursors (5 parts by weight) and a catalyst (amount added: see the below-described Table 1), followed by defoaming under vacuum, to thereby prepare a ceramic slurry. The urethane precursors (binder precursors) employed were an isocyanate and a polyol. The isocyanate was 4,4'-diphenylmethane diisocyanate. The polyol was ethylene glycol (EG).

The ceramic slurry was formed, through the aforementioned injection molding method, into a primary powder molded product having a square shape (100 mm x 100 mm) and a thickness of 1 mm. After completion of molding, the primary powder molded product was allowed to stand at ambient temperature for two hours, and then released from the molding die, followed by sufficient drying and solidification in a dryer under heating at 80°C for 12 hours, to thereby produce a ceramic green molded product.

The "percent drying shrinkage (%)" of the primary powder molded product is represented by the percent reduction in dimensions in length and width directions of the primary powder molded product as measured when the primary powder molded product is formed into the ceramic green molded product through drying and solidification. Specifically, dimensions in length and width directions of a single sample were measured at 10 points, and there were calculated the mean of the thus-measured dimensions and the variation thereof (standard deviation: square root (%) of the value obtained by calculating the square of the difference between each of the dimensions measured at the 10 points and the mean of the dimensions measured at the 10 points, and dividing the sum of the thus-calculated squares by 9 (i.e., 10 minus 1)). Table 1 shows the evaluation results regarding percent drying shrinkage (mean) and variation thereof in the case where different dispersion media were employed. In Table 1, "curing time" corresponds to the time period between the point in time at which vacuum defoaming is completed during the preparation of the ceramic slurry by mixing of the ceramic powder, the dispersion medium, the dispersant, the urethane precursors, and the catalyst and vacuum-defoaming and the point in time at which the viscosity of the ceramic slurry, as measured by means of a viscometer of BROOK FIELD Company (DV-III+RHEOMETER), reaches 50,000 cP.

**[Table 1]**

| Dispersion medium A: diethylene glycol dimethyl ether (molecular weight: 134.17 g/mol) (trade name: Dimethyl Carbitol) | | | | | | | |
|---|---|---|---|---|---|---|---|
| Amount of catalyst [parts] | < 0.2 | 0.2 | 0.3 | 0.4 | 0.5 | 0.8 | > 0.8 |
| Curing time [seconds] | Long curing time | 900 | 720 | 480 | 300 | 120 | Curing during mixing |
| Percent drying shrinkage [%] | | 6.26 | 6.08 | 5.92 | 5.65 | 5.39 | |
| Variation [%] | | 0.087 | 0.078 | 0.072 | 0.056 | 0.048 | |
| | | | | | | | |

| Dispersion medium B: dimethyl glutarate (molecular weight: 160.17 g/mol) | | | | | | | |
|---|---|---|---|---|---|---|---|
| Amount of catalyst [parts] | < 0.05 | 0.05 | 0.08 | 0.1 | 0.15 | 0.2 | > 0.2 |
| Curing time [seconds] | Long curing time | 900 | 720 | 480 | 300 | 120 | Curing during mixing |
| Percent drying shrinkage [%] | | 2.11 | 1.91 | 1.70 | 1.60 | 1.25 | |
| Variation [%] | | 0.061 | 0.044 | 0.035 | 0.031 | 0.015 | |
| | | | | | | | |

| Dispersion medium C: ethylene glycol monobutyl ether acetate (molecular weight: 160.21 g/mol) (trade name: Butyl Cellosolve Acetate) | | | | | | | |
|---|---|---|---|---|---|---|---|
| Amount of catalyst [parts] | < 0.03 | 0.03 | 0.05 | 0.07 | 0.08 | 0.1 | > 0.1 |
| Curinq time [seconds] | Long curing time | 900 | 720 | 480 | 300 | 120 | Curing during mixing |
| Percent drying shrinkage [%] | | 1.81 | 1.60 | 1.35 | 1.00 | 0.73 | |
| Variation [%] | | 0.042 | 0.030 | 0.026 | 0.020 | 0.011 | |

As shown in Table 1, in the case where dispersion medium A (diethylene glycol dimethyl ether: trade name "Dimethyl Carbitol (Carbitol: registered trademark)," molecular weight: 134.17) was employed as Comparative Example, when the amount of the catalyst added exceeded 0.8 parts by weight, the slurry was cured during preparation thereof (during mixing of the raw materials), and a molded product failed to be produced. Meanwhile, when the amount of the catalyst added was less than 0.2 parts by weight, curing of the slurry required a long period of time, and the slurry was not suitable for molding. When the amount of the catalyst added was 0.2 to 0.8 parts by weight, the greater the amount of the catalyst, the shorter the curing time, and the smaller the percent drying shrinkage and the variation thereof. This tendency was similar in the case where dispersion medium B (dimethyl glutarate, molecular weight: 160.17) or dispersion medium C (ethylene glycol monobutyl ether acetate: trade name "Butyl Cellosolve Acetate (Cellosolve: registered trademark)," molecular weight: 160.21) was employed as Example.

As compared with the case were dispersion medium A having a relatively low molecular weight (less than 150) was employed, in the case where dispersion medium B or C having a relatively high molecular weight (150 or more) was employed, the amount of the catalyst required was considerably smaller, and percent drying shrinkage and the variation thereof were very small. Although the effects of the amount of a catalyst added were not confirmed, it was found that when diethylene glycol monobutyl ether acetate (trade name "Butyle Carbitol Acetate (Carbitol: registered trademark)," molecular weight: 204.26) was employed, curing time became very short, and percent drying shrinkage and the variation thereof became very small (more favorable as compared with the case of dispersion medium C having a molecular weight of 160.21). However, when a dispersion medium having a molecular weight of 230 or more was employed, the viscosity of the resultant slurry was increased, and difficulty was encountered in producing a molded product. In consideration of the tendency that a dispersion medium having a higher molecular weight has a higher boiling point, employment of a dispersion medium having a molecular weight of 230 or more is not suitable, since a long period of time is required for drying.

In the case where dispersion medium B or C was employed, when the amount of the catalyst added fell within such a range that an appropriate curing time was achieved, percent drying shrinkage was considerably reduced, as compared with the case where dispersion medium A was employed. In the case where dispersion medium A was employed, the variation of percent drying shrinkage was relatively large even when the amount of the catalyst added fell within such a range that an appropriate curing time was achieved. In contrast, in the case where dispersion medium B was employed, the variation of percent drying shrinkage was very small when the amount of the catalyst added was 0.1 to 0.2 parts by weight, whereas in the case where dispersion medium C was employed, the variation of percent drying shrinkage was very small when the amount of the catalyst added was 0.05 to 0.1 parts by weight.

Meanwhile, it was found that curing time was shorten then the percent drying shrinkage and the variation of the percent drying shrinkage were reduced by adding water when the amount of the catalyst added is low such as 0.05 or 0.1 parts by weight. Table 2 shows the results of the experiment. However, curing rate was too low and molding was not properly performed in the case that the catalyst was not added (i.e., the amount of the catalyst added was 0) even when the amount of water added was increased. As shown in Table 2, curing time was shorten then the percent drying shrinkage and the variation of the percent drying shrinkage were reduced according to the increase of the amount of water added in the case that the amount of the catalyst added were 0.05 and 0.1 parts by weight. The cause seems that urethane reaction rate is enhanced by adding water then the aforementioned intermolecular network is formed through cross-linking more rapidly.

**[Table 2]**

| Dispersion medium B: dimethyl glutarate (molecular weight: 160.17 g/mol)/ amount of catalyst added: 0.05 [parts] | | | | | | | |
|---|---|---|---|---|---|---|---|
| Amount of water added [parts] | 0 | 0.1 | 0.2 | 0.3 | 0.4 | 0.5 | 1.0 |
| Curing time [seconds] | 900 | 840 | 640 | 600 | 430 | 380 | 290 |
| Percent drying shrinkage [%] | 2.11 | 1.98 | 1.80 | 1.75 | 1.50 | 1.43 | 1.18 |
| Variation [%] | 0.061 | 0.050 | 0.041 | 0.040 | 0.030 | 0.028 | 0.022 |
| | | | | | | | |

| Dispersion medium B: dimethyl glutarate (molecular weight: 160.17 g/mol)/ amount of catalyst added: 0.1 [parts] | | | | | | | |
|---|---|---|---|---|---|---|---|
| Amount of water added [parts] | 0 | 0.1 | 0.2 | 0.3 | 0.4 | 0.5 | 1.0 |
| Curing time [seconds] | 480 | 390 | 260 | 230 | 170 | 110 | 70 |
| Percent drying shrinkage [%] | 1.70 | 1.34 | 1.10 | 1.07 | 0.99 | 0.93 | 0.88 |
| Variation [%] | 0.035 | 0.027 | 0.025 | 0.021 | 0.020 | 0.015 | 0.012 |

### <Examples of modifications>

The above-described embodiment and specific examples are, as mentioned above, mere examples of the best mode of the present invention which the applicant of the present invention contemplated at the time of filing the present application. The above-described embodiment and specific examples should not be construed as limiting the invention. Various modifications to the above-described embodiment and specific examples are possible, so long as the invention is not modified in essence.

Several modifications will next be exemplified. In the following description of the modifications, component members similar in structure and function to those of the above-described embodiment are denoted by names and reference numerals similar to those of the above-described embodiment. The description of the component members appearing in the above description of the embodiment can be applied as appropriate, so long as no inconsistencies are involved.

Needless to say, even modifications are not limited to those described below. Limitingly construing the present invention based on the above-described embodiment and the following modifications impairs the interests of an applicant (particularly, an applicant who is motivated to file as quickly as possible under the first-to-file system) while unfairly benefiting imitators, and is thus impermissible.

The structure of the above-described embodiment and the structures of the modifications to be described below are entirely or partially applicable in appropriate combination, so long as no technical inconsistencies are involved.

The urethane precursors are not limited to the aforementioned specific examples. For example, the polyol employed may have another functional group (e.g., a carboxylic acid group or an amino group) capable of reacting with an isocyanate group. Alternatively, in place of or together with the polyol, there may be employed a substance having, for example, the aforementioned carboxylic acid group or amino group (the substance may have one alcoholic hydroxyl group). In order to suppress the progress of urethane reaction before molding, a blocking agent may be added to the slurry, or the urethane precursors (e.g., isocyanate) may be provided with a blocking effect.

The organic binder employed is not limited to a urethane resin. A well-known reaction other than urethane reaction (e.g., radical polymerization) may be suitably employed as the chemical reaction for producing the organic binder.

As described in the aforementioned specific examples, a portion of step 3 (drying-solidification step) may be carried out almost in parallel with step 2. Alternatively, the entire step 3 may be carried out almost in parallel with step 2. Alternatively, step 2 and step 3 may be carried out separately (i.e., so as not to overlap with each other).

Step 3 may be a step of performing solidification and drying at one time through heating. Alternatively, step 3 may be carried out at ambient temperature without performing heating. That is, the chemical reaction for producing the organic binder may be promoted by a reaction promoter and application of energy other than thermal energy.

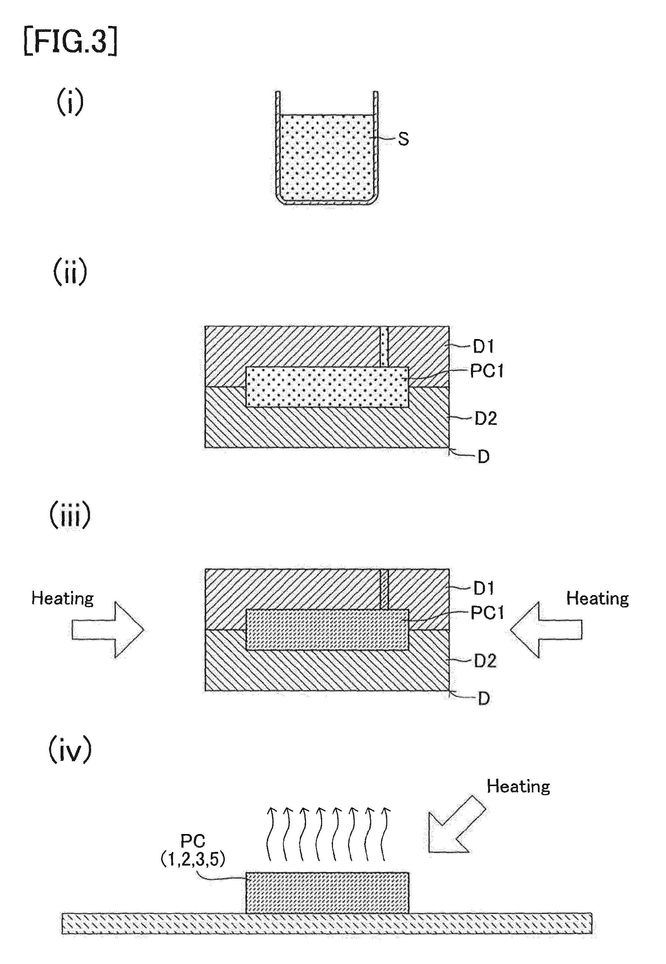

FIG. 3 schematically shows a modification of the embodiment of the production method shown in FIG. 1. As shown in (iii) of FIG. 3, in this modification, gelation can be further promoted by heating a primary powder molded product PC1 in a die D.

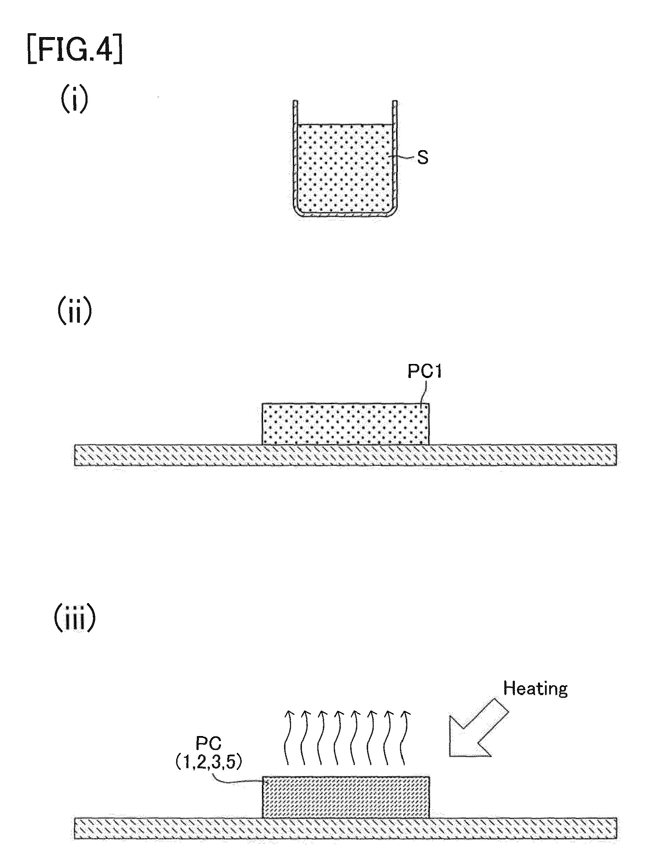

FIG. 4 schematically shows another modification of the embodiment of the production method shown in FIG. 1. As shown in (ii) of FIG. 4, in this modification, step 2 (molding step) is a step of molding a slurry S into a thin-film-like product through the doctor blade method.

Needless to say, those modifications which are not particularly referred to are also encompassed in the technical scope of the present invention, so long as the invention is not modified in essence.

Those components which partially constitute means for solving the problems to be solved by the present invention and are illustrated with respect to operations and functions encompass not only the specific structures disclosed above in the description of the above embodiment and modifications but also any other structures that can implement the operations and functions. Further, the contents (including specifications and drawings) of the prior application and publications cited herein can be incorporated herein as appropriate by reference.

## Claims

1. A method for producing a powder molded product comprising:
a slurry preparation step of preparing a slurry containing a powdery molding raw material, a dispersion medium for dispersing the molding raw material, a dispersant for uniformly dispersing the molding raw material in the dispersion medium, a binder precursor for producing an organic binder, which is a synthetic resin, through a chemical reaction, and a reaction promoter for promoting the chemical reaction;
a molding step of molding the prepared slurry into a primary powder molded product having a specific shape; and
a drying-solidification step of solidifying the slurry by promoting the aforementioned chemical reaction in the primary powder molded product, and removing, through evaporation, the dispersion medium from the primary powder molded product,
wherein the dispersion medium has a molecular weight of 150 or more.

2. A method for producing a powder molded product according to claim 1, wherein, in the drying-solidification step, a urethane resin serving as the organic binder is produced through urethane reaction.

3. A powder molded product produced through molding of a slurry containing a powdery molding raw material, a dispersion medium for dispersing the molding raw material, a dispersant for uniformly dispersing the molding raw material in the dispersion medium, a binder precursor for producing an organic binder, which is a synthetic resin, through a chemical reaction, and a reaction promoter for promoting the chemical reaction,
wherein the dispersion medium has a molecular weight of 150 or more.

4. A powder molded product according to claim 3, wherein the binder precursor produces a urethane resin serving as the organic binder through urethane reaction, and the reaction promoter is a urethane reaction catalyst.
